# FASCICULE DE BREVET EUROPEEN

(11) **EP 3 237 268 B1**
(45) Date de publication et mention de la délivrance du brevet: **19.06.2019**
(21) Numéro de dépôt: 15823697.6
(22) Date de dépôt: 21.12.2015
(51) Int. Cl.: B62D 29/00, B29C 70/78, B29C 70/08, B29L 31/30, B29C 43/18, B29C 45/14

(54) **PROCEDE DE FABRICATION D'UNE PIECE DE STRUCTURE HYBRIDE DE VEHICULE AUTOMOBILE ET PIECE DE STRUCTURE HYBRIDE CORRESPONDANTE**
VERFAHREN ZUR HERSTELLUNG EINES HYBRIDSTRUKTURTEILS EINES KRAFTFAHRZEUGES UND ENTSPRECHENDES HYBRIDSTRUKTURTEIL
METHOD FOR PRODUCING A HYBRID-STRUCTURE PART OF A MOTOR VEHICLE AND CORRESPONDING HYBRID-STRUCTURE PART

(30) Priorité: 23.12.2014 FR 1463218
(43) Date de publication de la demande: 01.11.2017
(73) Titulaire: Renault S.A.S., 92100 Boulogne-Billancourt (FR); Compagnie Plastic Omnium, 69007 Lyon (FR)
(72) Inventeur: JAUNASSE, Philippe, 75015 Paris (FR); ROCHEBLAVE, Laurent, 69100 Villeurbanne (FR)
(74) Mandataire: Fédit-Loriot
(86) Numéro de dépôt international: PCT/FR2015/053669
(87) Numéro de publication internationale: WO 2016/102859

(56) Documents cités:
- DE-A1-102009 042 272

## Description

L'invention concerne un procédé de fabrication d'une pièce de structure hybride de véhicule automobile et une pièce de structure hybride correspondante.

Par pièce de structure hybride, on entend une pièce de structure formée de plusieurs matériaux différents, notamment un matériau métallique et un ou plusieurs matériaux polymères.

Certains éléments de structure d'un véhicule automobile sont particulièrement sollicités lors d'un choc et doivent pouvoir absorber une partie de l'énergie du choc afin de préserver l'intégrité de la structure du véhicule. De tels éléments de structure doivent en outre être suffisamment résistants pour supporter diverses fonctions structurelles. C'est le cas par exemple d'un pied milieu automobile, lequel est fortement sollicité lors d'un choc latéral et doit également assurer à la fois le maintien de la porte arrière via des charnières et la tenue de la porte avant via le système de fermeture de celle-ci.

En outre, les constructeurs cherchent à alléger les structures de véhicule automobile afin de réduire leur consommation énergétique.

On connaît notamment des structures dites hybrides formées de différents matériaux, en général un matériau métallique et un matériau polymère.

Ainsi, le document DE3011336A1 décrit une pièce légère obtenue par assemblage d'une tôle métallique et d'un matériau polymère chargé en fibres par collage ou pressage. Le procédé décrit permet d'obtenir une pièce présentant un aspect extérieur de meilleure qualité, mais la résistance de la pièce obtenue n'est pas mentionnée.

Le document EP0370342A2 décrit une pièce de structure légère facile à réaliser et présentant une bonne résistance et rigidité. La pièce est formée d'une pièce creuse comportant, à l'intérieur de sa cavité, un réseau de nervures en matériau polymère injecté. La pièce creuse peut être métallique ou peut être un polymère chargé en fibres mis en forme par pressage à chaud. La solidarisation du réseau de nervures sur la pièce creuse est obtenue par des liaisons traversantes. Ce type de liaison présente l'inconvénient de fragiliser la pièce creuse. En outre, une telle liaison par points discontinus ne permet pas de faire travailler la pièce creuse et le réseau de nervure en combinaison de façon optimale et constitue un frein à l'allégement

Le document EP1550604B1 décrit un procédé de fabrication d'une pièce de structure hybride dans lequel on met en forme une nappe métallique préalablement enduite d'un revêtement de surface réactivable à chaud, puis on rapporte une matière thermoplastique sur la face de la nappe métallique comportant le revêtement de surface. Bien que la résistance de ce type de pièce hybride soit correcte pour des pièces semi-structurelles, elle peut s'avérer insuffisante lors d'un choc, en particulier pour des pièces du châssis automobile aussi structurelles qu'un pied milieu, pied A ou C, longeron extérieur longitudinal, traverse de pavillon, poutre de choc, ou tout autre élément structurel de véhicule....

Le document DE102009042272A1 décrit une pièce de structure présentant une couche de renfort en matériau polymère placée sur une feuille de métal et une structure de renfort en matériau thermoplastique appliquée sur la couche de renfort et présentant des nervures. Les rebords de la feuille de métal ne sont pas recouverts par la couche de renfort ou la structure de renfort.

L'invention vise à pallier ces inconvénients en proposant un procédé de fabrication d'une pièce de structure hybride de véhicule automobile qui soit à la fois légère et résistante, notamment en cas de choc.

A cet effet, l'objet de l'invention concerne un procédé de fabrication d'une pièce de structure hybride de véhicule automobile, caractérisé en ce qu'il comprend les étapes suivantes :
(a) mise en forme d'une nappe de matériau métallique,
(b) fourniture d'une nappe de matériau composite comprenant au moins une couche de fibres imprégnée ou noyée dans une matrice polymère, notamment thermoplastique ou thermodurcissable, ladite couche de fibres étant choisie parmi une couche de fibres unidirectionnelles et une couche de fibres tissées,
(c) application d'une couche de matériau de liaison sur une face de ladite nappe de matériau métallique, avant ou après sa mise en forme, ou sur une face de ladite nappe de matériau composite avant ou après sa mise en forme,
(d) formation d'un élément hybride par mise en forme de ladite nappe de matériau composite à la forme de ladite nappe de matériau métallique et solidarisation de la nappe de matériau composite à la nappe de matériau métallique au moyen de ladite couche de matériau de liaison,
(e) réalisation d'éléments de rigidification par surmoulage d'au moins une partie de l'élément hybride ainsi formé en utilisant un matériau polymère (par exemple un polymère thermoplastique ou thermodurcissable) afin de former une pièce de structure hybride.

Un tel procédé permet d'obtenir une pièce de structure hybride particulièrement résistante, notamment aux chocs, et légère. La nappe de matériau métallique apporte une bonne tenue à l'allongement et en grande déformation, la nappe de matériau composite épouse la forme de la nappe de matériau métallique et permet d'augmenter la rigidité et la résistance mécanique de l'ensemble, tout en augmentant la capacité de l'ensemble à absorber les chocs. Enfin, le matériau polymère surmoulé permet de rigidifier et consolider la pièce de structure hybride.

Selon l'invention, l'étape (d) de formation d'un élément hybride est mise en oeuvre de sorte que la nappe de matériau composite recouvre partiellement une face de ladite nappe de matériau métallique, et l'étape (e) de réalisation des éléments de rigidification est mise en oeuvre de sorte que le matériau polymère recouvre, au moins partiellement, les parties de la face de la nappe de matériau métallique non recouvertes par ladite nappe de matériau composite.

A noter que l'ordre des étapes (a) et (b) est indifférent, ces étapes pouvant être inversées.

### Etape (a)

En ce qui concerne l'étape (a) de mise en forme, cette étape peut être une étape d'emboutissage, à froid ou à chaud. La nappe de matériau métallique peut être une tôle, par exemple d'une épaisseur de 0,1 à 1,5 mm, avantageusement de 0,1 à 1mm, de préférence de 0,2 à 0,8 mm. Cette nappe de matériau métallique peut être en aluminium, magnésium, titane ou en alliage à base d'un ou plusieurs de ces métaux ou peut être en un alliage à base de fer, par exemple un acier ou un acier inoxydable. Le matériau métallique peut être un matériau, notamment un acier, emboutissable à froid.

La nappe métallique forme une partie de préférence extérieure de la pièce de structure hybride finale. Cette nappe étant métallique, cela permet un assemblage sur la caisse du véhicule par les techniques habituelles de soudage, sans nécessiter une modification des procédés existants actuellement sur les chaînes de montage en usine.

### Etape (b)

En ce qui concerne l'étape (b) de fourniture d'une nappe de matériau composite, la nappe comprend au moins une couche de fibres imprégnée ou noyée dans une matrice polymère thermoplastique ou thermodurcissable, cette couche de fibres étant choisie parmi une couche de fibres unidirectionnelles et une couche de fibres tissées. La ou les couches de fibres forment ainsi des renforts continus, qui s'étendent sur tout ou partie de la longueur de la pièce ou sur tout ou partie de sa surface. La présence d'une ou plusieurs couches de ce type permet ainsi d'améliorer la résistance de la pièce de structure hybride.

Lorsque la nappe de matériau composite présente plusieurs couches de fibres unidirectionnelles, celles-ci sont de préférence toutes alignées dans une même direction. En général, la direction des fibres unidirectionnelles est choisie parallèle à la plus grande dimension de la pièce à réaliser.

En cas de présence de plusieurs couches de fibres tissées, les directions principales des fibres peuvent être identiques ou différentes d'une couche à l'autre.

Avantageusement, les fibres unidirectionnelles ou des fibres de la trame de fibres tissées peuvent être disposées suivant la plus grande dimension de la pièce de structure à réaliser afin d'améliorer la résistance de pièce suivant sa plus grande dimension.

Selon un mode de réalisation, la nappe de matériau composite peut comprendre au moins une couche de fibres unidirectionnelles et au moins une couche de fibres tissées. Les fibres unidirectionnelles permettent d'améliorer la rigidité et la tenue aux contraintes dans la direction des fibres alors que les fibres tissées permettent d'améliorer la résistance aux chocs de la pièce de structure hybride. On obtient ainsi une pièce de structure hybride particulièrement résistante aux chocs et capable de les absorber.

Avantageusement, la nappe de matériau composite fournie à l'étape (b) peut comprendre une ou plusieurs couches de fibres de nature identique ou différente, lesdites fibres étant choisies parmi les fibres de verre, les fibres de carbone, les fibres de basalte, des fibres métalliques, les fibres aramides.

De préférence, la nappe de matériau composite peut comprendre au moins une couche de fibres unidirectionnelles en fibres de carbone et au moins une couche de fibres tissées en fibres de verre.

La présente invention n'est pas limitée par un nombre de couches particulier de fibres unidirectionnelles et/ou tissées. Le nombre de couches pourra par exemple être choisi en fonction de la résistance souhaitée, notamment à la rupture, et/ou de l'épaisseur maximale souhaitée. La nappe de matériau composite peut par exemple présenter une épaisseur de 3 à 6mm, avantageusement de 3 à 5 mm, de préférence de 4 à 5mm.

Avantageusement, la nappe de matériau composite peut comprendre en alternance des empilages de couches de fibres unidirectionnelles et des empilages de couches de fibres tissées. Ces empilages peuvent comprendre de 2 à 6 couches de fibres superposées. Les empilages peuvent avantageusement être répartis de manière symétrique. On peut par exemple prévoir jusqu'à 7 empilages, voire davantage. Par exemple 5 empilages, composés par exemple de 2 à 6 couches de fibres.

La teneur en fibres de la nappe de matériau composite peut être variable. Elle est par exemple de 40 à 85% en masse, avantageusement de 50 à 85%, de préférence de 55 à 80%.

Le matériau polymère thermoplastique présent dans la nappe de matériau composite peut être choisi parmi : les polyamides aliphatiques (PA), les polyphtalamides (PPA), le polybutylène téréphtalate (PBT), le polyéthylène téréphtalate (PET), les polycarbonates (PC), voire le polypropylène et leurs mélanges. A titre d'exemple, on peut utiliser du polyamide 66 (PA66), du polyamide 6 (PA6).

Le matériau polymère thermodurcissable présent dans la nappe de matériau composite peut être choisi parmi une résine polyester, vinylester, epoxy, polyuréthane ou leur mélange. On peut ainsi former un produit de type « SMC » (« Sheet Molding Compound » ou composé moulé en feuilles).

La nappe de matériau composite peut être réalisée par des procédés connus tels que les procédés RTM (Resin Transfer Molding : Moulage par transfert de résine), éventuellement à haute pression, par compression (par exemple par calandage), sur des presses double-bande, par pultrusion ou tout autre procédé adapté, par exemple les procédés d'imprégnation par un monomère en phase de polymérisation.

Une telle nappe de matériau composite apporte à la pièce de structure hybride finale une capacité d'absorption d'énergie élevée, améliorant ainsi sa tenue aux chocs. En effet, la nappe de matériau composite combine de nombreux modes de ruine lorsqu'elle est soumise à de fortes déformations, chaque mode de ruine absorbant de l'énergie. Ces modes de ruine sont notamment :
- la rupture du polymère,
- la rupture des fibres,
- le délaminage entre les couches de composite (lorsque plusieurs couches existent),
- la décohésion entre les fibres et le polymère,
- les frottements entre les fibres et le polymère.

### Etape (c)

Cette étape peut être réalisée avant ou après l'étape (a) de mise en forme, de préférence après, ou après l'étape (b).

La couche de matériau de liaison peut être une couche de matériau polymère, de préférence compatible chimiquement avec le polymère de la nappe de matériau composite, mais cela n'est pas obligatoire.

Avantageusement, le matériau de liaison est capable de solidariser la nappe de matériau composite à la nappe de matériau métallique dans des conditions prédéterminées de température. Le matériau de liaison est alors dit « thermoactivable ». On utilise aussi le terme anglais « hot-melt ».

A titre d'exemple, les conditions dans lesquelles le matériau de liaison est thermoactivable sont les conditions d'estampage à chaud de la nappe de matériau composite ou de surmoulage de la matière de surmoulage.

Le matériau de liaison peut être un matériau apte à réticuler. Pour ce type de matériau, un ramollissement ultérieur n'est pas possible, notamment lors d'une exposition à une température prédéterminée pendant une durée donnée (avantageusement celles des conditions d'estampage à chaud de la nappe de matériau composite ou celles d'un cycle de cataphorèse et peinture sur une ligne constructeur). Cela présente l'avantage de solidariser au moins partiellement la nappe de matériau composite à la nappe de matériau métallique avec un niveau de tenue permettant ensuite de passer dans toutes les étapes de chauffe de la chaine de fabrication du constructeur automobile en limitant, voire en bloquant, le mouvement des deux nappes l'une par rapport à l'autre ce qui permet de les figer en bonne position géométrique même si la réaction de réticulation se termine lors des chauffes chez le constructeur.

Le matériau de liaison peut aussi être un matériau hot-melt non réticulable. Le matériau de liaison hot-melt non réticulable peut être choisi parmi les matériaux à base de copoly-ester ou à base copolyamide, les thermoplastiques élastomères à base polyoléfine.

Le matériau de liaison hot-melt réticulable peut être choisi parmi les matériaux à base de co-polyamide, comprenant éventuellement un isocyanate, un époxyde, voire une polyoléfine. Des matériaux de liaison utilisables de type adhésifs sont décrits dans WO2010-136241A1, EP2435246A1.

D'autres types de matériaux sont également envisageables pourvu qu'ils permettent une adhésion à chaud, comme par exemple des matériaux à base de silicone, décrits dans CA 2321884C, ou encore les colles polyuréthane HCM (Heat Curable Melt) sans que cette liste soit limitative.

A titre d'exemple, les matériaux suivants peuvent être utilisés :
- matériaux de liaison hot-melt réticulables : Evonik®. Vestamelt® X1333-P1, Nolax® HCM 555, Lohmann DuploTEC®, Tesa HAF®,
- matériaux de liaison hot-melt non réticulables : EMS Griltex® CE20, EMS Griltex ®CT100, Nolax Cox® 391.

### Etape (d)

A l'étape (d) de formation d'un élément hybride, la mise en forme de la nappe de matériau composite peut être réalisée préalablement à son application sur la nappe de matériau métallique et à sa fixation à celle-ci grâce à la couche de matériau de liaison. Toutefois, une telle étape de mise en forme est avantageusement réalisée en même temps que l'étape de solidarisation afin de faciliter la réalisation de la pièce et de réduire le temps de fabrication.

Cette étape (d) est mise en oeuvre de sorte que la nappe de matériau composite recouvre partiellement une face de ladite nappe de matériau métallique.

Notamment, la mise en forme peut être réalisée par estampage à chaud, de préférence directement sur la nappe de matériau métallique.

La solidarisation de la nappe de matériau composite à la nappe de matériau métallique est obtenue au moyen de la couche de matériau de liaison dans des conditions prédéterminées notamment de température, de pression, et éventuellement de durée.

Avantageusement, ces conditions prédéterminées de température correspondent aux conditions d'estampage à chaud de la nappe de matériau composite, lesquelles peuvent varier en fonction de la composition de cette dernière.

Avantageusement, l'étape (d) de formation d'un élément hybride peut être une étape d'estampage à chaud (on parle aussi de thermo-compression) de ladite nappe de matériau composite sur ladite nappe de matériau métallique dans des conditions de température et de pression efficaces pour obtenir la mise en forme de ladite nappe de matériau composite, la couche de matériau de liaison étant positionnée entre la nappe de matériau composite et la nappe de matériau métallique, ledit matériau de liaison étant capable de solidariser la nappe de matériau composite à la nappe de matériau métallique dans les conditions d'estampage à chaud.

Ceci permet notamment d'utiliser un même outillage pour les étapes (d) et (e), l'étape (e) étant alors par exemple réalisée par moulage en injection ou compression. Dans le cas d'une étape (e) réalisée par compression, cette étape peut être simultanée avec l'étape (d).

L'estampage à chaud peut par exemple être réalisé de la manière suivante. La nappe de matériau composite est chauffée préalablement à l'opération d'estampage à chaud, à une température suffisante pour permettre son ramollissement, par exemple une température supérieure ou égale à la température de fusion du polymère de la nappe de matériau composite. La nappe de matériau composite ainsi ramollie est ensuite placée dans un moule d'estampage, sur la nappe de matériau métallique. L'estampage est alors réalisé après fermeture du moule, sous une pression efficace pour la mise en forme de la nappe de matériau composite. A titre d'exemple, la pression appliquée peut être de 80 à 170 bars, de préférence de 100 à 150 bars. Le moule peut éventuellement être maintenu à une température de 70 à 160°C de préférence de 80°C à 140°C, pendant l'application de la pression.

On peut avantageusement prévoir, lors de l'étape de fourniture de la nappe de matériau composite ou à la fin de l'étape d'estampage, une étape de récupération des chutes issues de la nappe de matériau composite et résultant de la découpe de ladite nappe ou de pièces ratées (rebuts) lors de la fermeture du moule et/ou de l'opération d'estampage. Ces chutes peuvent être broyées et avantageusement réutilisées à l'étape (e).

### Etape (e)

En ce qui concerne l'étape (e) de réalisation d'éléments de rigidification, cette étape met en oeuvre le surmoulage d'au moins une partie de l'élément hybride formé à l'étape (d) au moyen d'un matériau polymère thermoplastique ou thermodurcissable. Cette étape permet notamment de renforcer la pièce hybride en augmentant son inertie.

L'étape (e) est mise en oeuvre de sorte que le matériau polymère recouvre, au moins partiellement, les parties de la face de la nappe de matériau métallique non recouvertes par ladite nappe de matériau composite.

Le matériau polymère thermoplastique ou thermodurcissable peut être le même ou différent du matériau polymère faisant partie de la nappe de matériau composite fournie à l'étape (b).

Cette étape peut être réalisée dans un outillage différent de celui de l'étape (d).

De préférence, l'étape (e) est réalisée dans le même outillage que celui utilisé à l'étape (d), notamment lorsque l'étape (d) est réalisée par estampage à chaud, ce qui permet de réduire les coûts de fabrication. L'étape (e) peut alors être une étape de moulage par injection ou compression.

Avantageusement, les éléments de rigidification formés sont des nervures de rigidification, s'étendant optionnellement sensiblement perpendiculairement à la nappe de matériau composite, autrement dit à la surface de la nappe.

Notamment, lorsque la nappe de matériau métallique présente une concavité, ces éléments de rigidification sont avantageusement disposés à l'intérieur de la concavité afin de renforcer l'ensemble. En particulier, en cas de choc, la présence des éléments de rigidification permet de limiter une ouverture ou une fermeture importante de la concavité sous l'effet du choc. Notamment, dans le cas d'un pied, les éléments de rigidification permettent de limiter une ouverture ou une fermeture importante aussi bien du galbe dans la hauteur du pied ou de façon transversale en maintenant l'écartement des bords de la section en creux.

Avantageusement, des fibres disposées de manière aléatoire peuvent être ajoutées au matériau polymère avant le surmoulage, afin d'obtenir des éléments de rigidifications plus résistants. Ces fibres peuvent être de nature identique ou différente des fibres présentes dans la nappe de matériau composite de l'étape (b). Il peut s'agir de fibres de carbone, de verre, de basalte, de fibres métalliques, ou encore de fibres de polymère, notamment de fibres aramides.

Avantageusement, les fibres ajoutées sont de même nature qu'une ou plusieurs des fibres présentes dans la nappe de matériau composite.

En particulier, le matériau polymère peut comprendre les chutes broyées issues de la nappe en matériau composite et provenant de l'étape (d) ou de l'étape (b), éventuellement complétées avec un polymère, notamment celui présent dans le matériau composite de la nappe de matériau composite ou un autre polymère compatible chimiquement.

Ceci permet de réduire le coût global de réalisation de la pièce hybride.

L'invention concerne également une pièce de structure hybride de véhicule automobile pouvant être obtenue par mise en oeuvre du procédé selon l'invention, comprenant :
- une nappe de matériau métallique, notamment mise en forme,
- une nappe de matériau composite, notamment mise en forme, recouvrant au moins en partie une face de ladite nappe de matériau métallique, la nappe de matériau composite comprenant au moins une couche de fibres imprégnée ou noyée dans une matrice polymère, ladite couche de fibres étant choisie parmi une couche de fibres unidirectionnelles et une couche de fibres tissées,
- un matériau polymère, notamment moulé, recouvrant au moins en partie la face de ladite nappe de matériau métallique au moins partiellement recouverte de la nappe de matériau composite, ce matériau polymère formant optionnellement des nervures.

Une telle pièce de structure hybride est particulièrement résistante aux chocs, notamment lors d'un choc sensiblement perpendiculaire aux nappes de matériau métallique et composite.

Les compositions de la nappe de matériau métallique, de la nappe de matériau composite et du matériau polymère peuvent être tel que décrit en référence au procédé selon l'invention.

Cette pièce de structure hybride peut former un pied de structure. Il peut s'agir notamment d'un pied milieu de structure situé entre les deux portes d'un véhicule, ou encore d'un pied de structure avant ou arrière. Il peut également s'agir d'un longeron extérieur longitudinal, ou encore d'une traverse de pavillon ou d'une poutre de choc ou de tout autre élément structurel d'un véhicule.

Selon l'invention, la nappe de matériau composite recouvre partiellement une face de ladite nappe de matériau métallique, le matériau polymère recouvrant alors, au moins partiellement, les parties de cette face non recouvertes par ladite nappe de matériau composite. Ceci permet à la fois de limiter la formation de chutes de nappe de matériau composite et de recouvrir la surface de nappe de matériau métallique laissée libre, sans nuire pour autant à la tenue au choc de la pièce.

Avantageusement, les parties de la nappe de matériau métallique laissées découvertes, ou certaines de ces parties, peuvent être des parties destinées à réaliser une fixation de la pièce hybride sur une autre pièce de structure, notamment par soudure. Il s'agit par exemple de parties de bord de la pièce de structure hybride. La fixation ainsi réalisée entre les deux pièces peut servir à rigidifier la pièce hybride par exemple en formant une section fermée ; elle peut aussi servir à solidariser la pièce hybride sur une partie métallique de la caisse de véhicule automobile déjà pré-assemblée par ailleurs : par exemple, dans le cas d'un pied milieu hybride, les parties de la nappe de matériau métallique laissées découvertes peuvent être soudées en partie haute sur une traverse de pavillon ou brancard et en partie basse sur un longeron extérieur ou bavolet métallique.

Avantageusement, au moins un bord de la nappe de matériau métallique peut comporter des zones prédéterminées de fixation, notamment par soudure, qui ne sont pas recouvertes par la nappe de matériau composite ni par le matériau polymère, lesdites zones prédéterminées de fixation étant séparées par des zones recouvertes de matériau polymère. Cet agencement permet de limiter les ruptures d'inerties sur le ou les bords de la nappe de matériau métallique et d'éviter ainsi que celle-ci ne se déchire ou ne se déforme trop dans ces zones.

Dans ce cas, il peut être avantageux de prévoir qu'un bord de la pièce de structure sur lequel est fixé un bord de la nappe de matériau métallique présente des dépressions. Les zones entre les dépressions sont alors destinées à être en contact avec les zones de fixation de la nappe de matériau métallique, les dépressions étant destinées à être en contact avec les zones de la nappe de matériau métallique recouvertes de matériau polymère. Ceci permet de renforcer les bords assemblés.

Bien entendu, plusieurs bords de la pièce de structure destinés à être fixés à la pièce hybride peuvent présenter des dépressions.

Avantageusement, ces dépressions sont conformées pour compenser les surépaisseurs du bord de la nappe de matériau métalliques liées à la présence des zones recouvertes de matériau polymère.

L'invention concerne également un assemblage de la pièce de structure hybride selon l'invention à une pièce de structure, notamment métallique.

L'invention est maintenant décrite en référence aux figures suivantes non limitatives :
- La figure 1 est une représentation en perspective éclatée d'un mode de réalisation d'une pièce de structure hybride selon l'invention ;
- La figure 2 est une représentation partielle en perspective d'une pièce de structure hybride selon un autre mode de réalisation, vue du côté concave de la pièce,
- La figure 3a est une section transversale de la pièce représentée figure 2, assemblée à une pièce de structure ; la figure 3b est une section longitudinale d'un bord de la pièce représentée figure 2, assemblée à une pièce de structure.

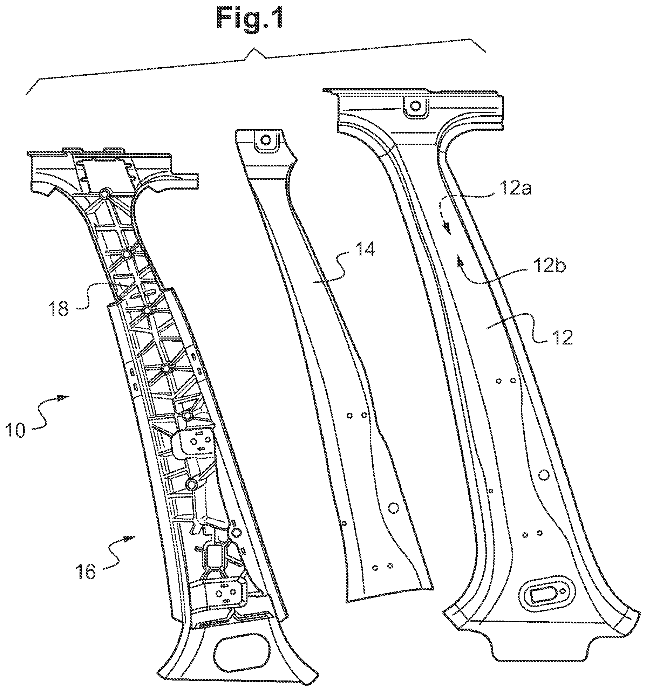

La figure 1 représente un pied milieu de structure de véhicule automobile 10 comprenant :
- une nappe de matériau métallique mise en forme 12,
- une nappe de matériau composite mise en forme 14,
- un matériau polymère moulé 16 recouvrant au moins en partie la nappe de matériau métallique 12 recouverte de la nappe de matériau composite 14, le matériau polymère 16 formant optionnellement des nervures 18.

La nappe de matériau métallique 12 se présente sous la forme d'une pièce creuse, présentant une face interne 12a concave et une face externe convexe 12b.

La nappe de matériau composite 14 recouvre la face 12a de la nappe de matériau métallique 12. Cette nappe de matériau composite 14 comprend plusieurs couches de fibres imprégnées ou noyées dans une matrice polymère.

On notera que l'invention n'est pas limitée à une forme particulière de la face 12a de la nappe de matériau métallique 12 sur laquelle on applique la nappe de matériau composite 14, cette face 12a pouvant être une face convexe ou autre.

Le matériau polymère 16 forme ici un réseau de nervures 18 s'étendant avantageusement à l'intérieur de la concavité des nappes 12 et 14 et recouvrant en partie les bords des deux nappes 12, 14.

A titre d'exemple, un pied milieu hybride 10 comprenant :
- une nappe 12 en acier de 0,67 mm d'épaisseur,
- une nappe de matériau composite de 4,35mm à base de polyamide 66 contenant de 55 à 80% en poids de fibres de carbone unidirectionnelles et de fibres de verre tissées, et
- un matériau thermoplastique 16 de 2 à 4,5mm d'épaisseur variable sur la pièce, en polyamide 66 contenant 50% en poids de fibres de verre coupées,
présente un poids inférieur de 30% par rapport à un pied entièrement en acier, présentant un même comportement en choc (vérifié par exemple par simulation).

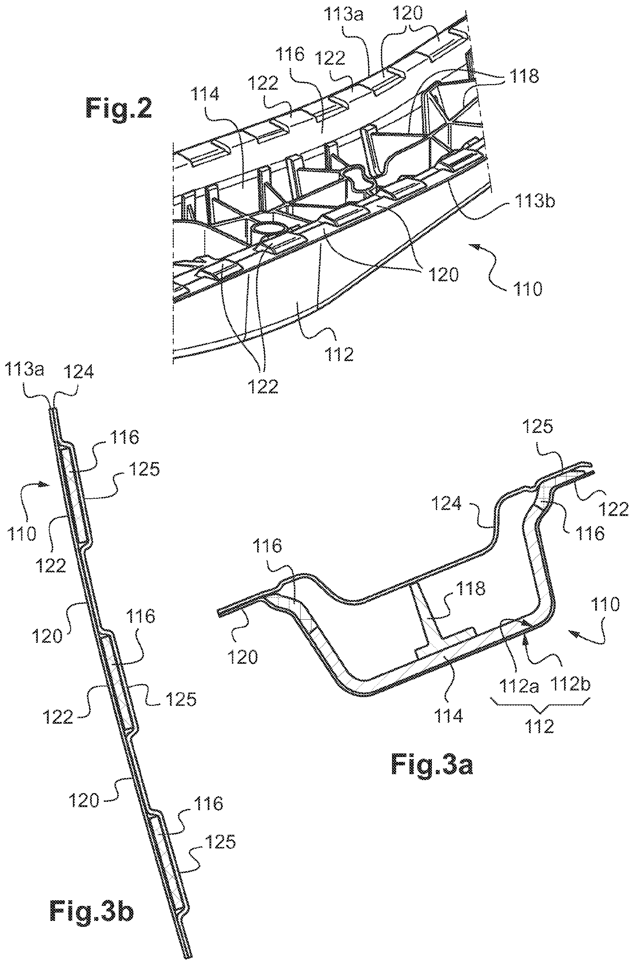

Les figures 2 et 3a, 3b représentent partiellement une pièce de structure hybride 110 selon un autre mode de réalisation. Dans ce mode de réalisation, la pièce de structure hybride 110 comprend également une nappe de matériau métallique mise en forme 112, une nappe de matériau composite mise en forme 114 et un matériau polymère moulé 116 recouvrant partiellement la nappe de matériau métallique 112. Tel que visible figure 2 et 3b, le matériau polymère 116 forme des nervures 118.

Comme dans le mode de réalisation précédent, la nappe de matériau métallique 112 se présente sous la forme d'une pièce creuse, présentant une face interne 112a concave et une face externe convexe 112b

Dans ce mode de réalisation, on note que la nappe de matériau métallique 112 n'est pas entièrement recouverte par la nappe de matériau composite 114, notamment au niveau de ses bords longitudinaux 113a et 113b. Ces bords longitudinaux 113a, 113b, comportent ainsi des zones de fixation 120 alternées avec des zones 122 recouvertes de matériau polymère 116. Les zones de fixation 120 ne sont donc pas recouvertes par la nappe de matériau composite 114 ni par le matériau polymère 116, ce qui permet de les fixer à une pièce de structure, notamment de les fixer par soudure à une pièce de structure métallique.

On notera en outre, que les parties de la nappe de matériau métallique 112 qui ne sont pas des zones de fixation 120 et qui ne sont pas recouvertes par la nappe de matériau composite 114 sont recouvertes de matériau polymère 116, tel que visible plus particulièrement sur la figure 3a (partie gauche de la figure). Autrement dit, dans ce mode de réalisation, dans une section transversale, chaque partie de la nappe de matériau métallique 112 qui n'est pas fixée à une pièce de structure est recouverte soit par la nappe de matériau composite 114, soit par le matériau polymère 116. Dans un autre mode de réalisation non représenté, il peut y avoir des parties de la nappe de matériau métallique 112 non fixées à une pièce de structure et non recouvertes par aucun autre matériau.

Une pièce de structure métallique 124 est partiellement représentée sur les sections 3a et 3b. Pour un meilleur assemblage avec la pièce de structure hybride 110, les bords de cette pièce 124 présentent des zones creuses ou dépressions 125 situées en regard des zones 122 recouvertes de matériau polymère 116 et permettant de compenser les surépaisseurs du bord 113a liées à la présence de ces zones 122.

## Revendications

1. Procédé de fabrication d'une pièce de structure hybride (10, 110) de véhicule automobile, **caractérisé en ce qu'**il comprend les étapes suivantes :
(a) mise en forme d'une nappe de matériau métallique (12, 112),
(b) fourniture d'une nappe de matériau composite (14, 114) comprenant au moins une couche de fibres imprégnée ou noyée dans une matrice polymère, ladite couche de fibres étant choisie parmi une couche de fibres unidirectionnelles et une couche de fibres tissées,
(c) application d'une couche de matériau de liaison sur une face de ladite nappe de matériau métallique, avant ou après sa mise en forme, ou sur une face de ladite nappe de matériau composite avant ou après sa mise en forme,
(d) formation d'un élément hybride par mise en forme de ladite nappe de matériau composite à la forme de ladite nappe de matériau métallique et solidarisation de la nappe de matériau composite à la nappe de matériau métallique au moyen de ladite couche de matériau de liaison, de sorte que la nappe de matériau composite recouvre partiellement une face de ladite nappe de matériau métallique,
(e) réalisation d'éléments de rigidification par surmoulage d'au moins une partie de l'élément hybride ainsi formé en utilisant un matériau polymère (16,116) afin de former une pièce de structure hybride, de sorte que le matériau polymère recouvre, au moins partiellement, les parties de la face de la nappe de matériau métallique non recouvertes par ladite nappe de matériau composite.

2. Procédé de fabrication selon la revendication 1, dans lequel l'étape (d) de formation d'un élément hybride est une étape d'estampage à chaud de ladite nappe de matériau composite sur ladite nappe de matériau métallique dans des conditions de température et de pression efficaces pour obtenir la mise en forme de ladite nappe de matériau composite, la couche de matériau de liaison étant positionnée entre la nappe de matériau composite et la nappe de matériau métallique, ledit matériau de liaison étant capable de solidariser la nappe de matériau composite à la nappe de matériau métallique dans les conditions d'estampage à chaud.

3. Procédé de fabrication selon la revendication 2, dans lequel les étapes (d) et (e) sont réalisées dans un même outillage.

4. Procédé de fabrication selon l'une quelconque des revendications 1 à 3, dans lequel la nappe de matériau composite fournie à l'étape (b) comprend au moins une couche de fibres unidirectionnelles et au moins une couche de fibres tissées.

5. Procédé de fabrication selon l'une quelconque des revendications 1 à 4, dans lequel la nappe de matériau composite fournie à l'étape (b) comprend une ou plusieurs couches de fibres de nature identique ou différente, lesdites fibres étant choisies parmi les fibres de verre, les fibres de carbone, les fibres de basalte, des fibres métalliques, les fibres aramides.

6. Procédé de fabrication selon l'une quelconque des revendications 1 à 5, dans lequel, au cours de l'étape (e), les éléments de rigidification formés sont des nervures de rigidification, s'étendant optionnellement sensiblement perpendiculairement à la nappe de matériau composite.

7. Procédé de fabrication selon l'une quelconque des revendications 1 à 6, dans lequel des fibres disposées de manière aléatoire sont ajoutées au polymère utilisé à l'étape (e).

8. Procédé de fabrication selon l'une quelconque des revendications 1 à 7, dans lequel le matériau polymère utilisé à l'étape (e) comprend :
- des chutes broyées issues de la nappe en matériau composite et provenant de l'étape (d) ou de l'étape (b),
- éventuellement complétées avec un polymère, notamment celui présent dans le matériau composite de la nappe de matériau composite.

9. Procédé de fabrication selon l'une des revendications 1 à 8, dans lequel les polymères présents dans la nappe de matériau composite et le polymère utilisé à l'étape (e) sont identiques ou différents et choisis parmi : les polyamides aliphatiques (PA), les polyphtalamides (PPA), le polybutylène téréphtalate (PBT), le polyéthylène téréphtalate (PET), les polycarbonates (PC), le polypropylène, les mélanges d'un ou plusieurs des polymères précédemment cités, les résines polyester, les résines vinylester, les résines epoxy, les résines polyuréthane, les mélanges d'une ou plusieurs de ces résines.

10. Pièce de structure hybride (10, 110) de véhicule automobile pouvant être obtenue par mise en oeuvre du procédé selon l'une quelconque des revendications 1 à 9, comprenant :
- une nappe de matériau métallique (12, 112),
- une nappe de matériau composite (14, 114) recouvrant au moins en partie une face (12a, 112a) de ladite nappe de matériau métallique (12, 112), la nappe de matériau composite (14, 114) comprenant au moins une couche de fibres imprégnée ou noyée dans une matrice polymère, ladite couche de fibres étant choisie parmi une couche de fibres unidirectionnelles et une couche de fibres tissées,
- un matériau polymère (16, 116), notamment moulé, recouvrant au moins en partie la face de ladite nappe de matériau métallique au moins partiellement recouverte de la nappe de matériau composite, ledit matériau polymère formant optionnellement des nervures (18, 118),
**caractérisée en ce que** la nappe de matériau composite (114) recouvre partiellement la face (112a) de ladite nappe de matériau métallique (112) et **en ce que** le matériau polymère (116) recouvre au moins partiellement les parties non recouvertes de cette face (112a).

11. Pièce de structure hybride (110) selon la revendication 10, **caractérisée en ce qu'**au moins un bord de la nappe de matériau métallique (112) comporte des zones prédéterminées de fixation (120) qui ne sont pas recouvertes par la nappe de matériau composite (114) ni par le matériau polymère (116), lesdites zones prédéterminées de fixation (120) étant séparées par des zones (122) recouvertes de matériau polymère (116).

12. Assemblage d'une pièce de structure hybride (110) selon la revendication 11 et d'une pièce de structure (124), **caractérisé en ce que** la pièce de structure hybride (110) est fixée à la pièce de structure (124) par les zones de fixation (120).

13. Assemblage selon la revendication 12, caractérisé en ce ladite pièce de structure (124) présente au moins un bord sur lequel est fixé un bord (113a, 113b) de la nappe de matériau métallique (112) et en ce que ledit bord de la pièce de structure (124) présente des dépressions (125), les zones du bord entre les dépressions étant en contact avec les zones de fixation (120) de la nappe de matériau métallique et les dépressions (125) étant en contact avec les zones (122) de la nappe de matériau métallique recouvertes de matériau polymère (116).

## Patentansprüche

1. Verfahren zur Herstellung eines Hybridstrukturteils (10, 110) eines Kraftfahrzeuges, **dadurch gekennzeichnet, dass** es die folgenden Schritte umfasst:
(a) Formen einer Lage aus metallischem Material (12, 112),
b) Bereitstellen einer Lage aus Kompositmaterial (14, 114), umfassend mindestens eine Faserschicht, die mit einer Polymermatrix imprägniert oder darin eingebettet ist, wobei die Faserschicht ausgewählt ist aus einer Schicht aus einseitig ausgerichteten Fasern und einer Schicht aus gewobenen Fasern,
(c) Aufbringen einer Schicht aus Verbindungsmaterial auf eine Seite der Lage aus metallischem Material vor oder nach seinem Formen, oder auf eine Seite der Lage aus Verbundmaterial vor oder nach seinem Formen,
(d) Bilden eines Hybridelements durch Formen der Lage aus Verbundmaterial in die Gestalt der Lage aus metallischem Material und festes Verbinden der Lage aus Verbundmaterial mit der Lage aus metallischem Material mit Hilfe der Schicht aus Verbindungmaterial, so dass die Lage aus Verbundmaterial teilweise eine Seite der Lage aus metallischem Material bedeckt,
(e) Durchführen von Versteifungselementen durch Aufformen von mindestens einem Teil des so gebildeten Hybridelements unter Verwendung eines Polymermaterials (16,116), um einen Hybridstrukturteil zu bilden, so dass das Polymermaterial mindestens teilweise die Teile der Seite der Lage aus metallischem Material bedeckt, die nicht von der Lage aus Verbundmaterial bedeckt sind.

2. Verfahren zur Herstellung nach Anspruch 1, wobei der Schritt (d) des Bildens eines Hybridelements ein Schritt des Heißprägens der Lage aus Verbundmaterial auf die Lage aus metallischem Material unter wirksamen Temperatur- und Druckbedingungen ist, um das Formen der Lage aus Verbundmaterial zu erzielen, wobei die Schicht aus Verbindungsmaterial zwischen der Lage aus Verbundmaterial und der Lage aus metallischem Material positioniert ist, wobei das Verbindungsmaterial ausgelegt ist, die Lage aus Verbundmaterial mit der Lage aus metallischem Material unter Heißprägebedingungen fest zu verbinden.

3. Verfahren zur Herstellung nach Anspruch 2, wobei die Schritte (d) und (e) in einem gleichen Werkzeug durchgeführt werden.

4. Verfahren zur Herstellung nach einem der Ansprüche 1 bis 3, wobei die Lage aus Verbundmaterial, bereitgestellt in Schritt (b), mindestens eine Schicht aus einseitig ausgerichteten Fasern und mindestens eine Schicht aus gewobenen Fasern umfasst.

5. Verfahren zur Herstellung nach einem der Ansprüche 1 bis 4, wobei die Lage aus Verbundmaterial, bereitgestellt in Schritt (b), eine oder mehrere Faserschichten identischer oder verschiedener Art umfasst, wobei die Fasern ausgewählt sind aus Glasfasern, Kohlenstofffasern, Basaltfasern, metallischen Fasern, Aramidfasern.

6. Verfahren zur Herstellung nach einem der Ansprüche 1 bis 5, wobei im Laufe von Schritt (e) die gebildeten Verstärkungselemente Verstärkungsrippen sind, die sich optional im Wesentlichen senkrecht zur Lage aus Verbundmaterial erstrecken.

7. Verfahren zur Herstellung nach einem der Ansprüche 1 bis 6, wobei Fasern, die auf zufällige Weise angeordnet sind, dem Polymer, verwendet in Schritt (e), zugegeben werden.

8. Verfahren zur Herstellung nach einem der Ansprüche 1 bis 7, wobei das Polymermaterial, verwendet in Schritt (e), Folgendes umfasst:
- zerkleinerte Abfälle, die aus der Lage aus Verbundmaterial stammen und aus Schritt (d) oder Schritt (b) abgeleitet sind,
- eventuell vervollständigt mit einem Polymer, insbesondere demjenigen, das im Verbundmaterial der Lage aus Verbundmaterial vorhanden ist.

9. Verfahren zur Herstellung nach einem der Ansprüche 1 bis 8, wobei die Polymere, die in der Lage aus Verbundmaterial vorhanden sind, und das Polymer, verwendet in Schritt (e), identisch oder verschieden sind und ausgewählt aus: aliphatischen Polyamiden (PA), Polyphtalamiden (PPA), Polybutylenterephtalat (PBT), Polyethylenterephtalat (PET), Polycarbonaten (PC), Polypropylen, Mischungen eines oder mehrerer der oben angegebenen Polymere, Polyesterharze, Vinylesterharze, Epoxidharze, Polyurethanharze, Mischungen eines oder mehrere dieser Harze.

10. Hybridstrukturteil (10, 110) eines Kraftfahrzeuges, das durch das Ausführen des Verfahrens nach einem der Ansprüche 1 bis 9 erhalten werden kann, umfassend:
- eine Lage aus metallischem Material (12, 112),
- eine Lage aus Verbundmaterial (14, 114), die mindestens zum Teil eine Seite (12a, 112a) der Lage aus metallischem Material (12, 112) bedeckt, wobei die Lage aus Verbundmaterial (14, 114) mindestens eine Faserschicht umfasst, die mit einer Polymermatrix imprägniert oder darin eingebettet ist, wobei die Faserschicht ausgewählt ist aus einer Schicht aus einseitig ausgerichteten Fasern und einer Schicht aus gewobenen Fasern,
- ein Polymermaterial (16, 116), insbesondere gemahlen, das mindestens zum Teil die Seite der Lage aus metallischem Material bedeckt, die mindestens teilweise von der Lage aus Verbundmaterial bedeckt ist, wobei das Polymermaterial optional Rippen (18, 118) bildet,
**dadurch gekennzeichnet, dass** die Lage aus Verbundmaterial (114) teilweise die Seite (112a) der Lage aus metallischem Material (112) bedeckt, und dadurch, dass das Polymermaterial (116) mindestens teilweise die nicht bedeckten Teile dieser Seite (112a) bedeckt.

11. Hybridstrukturteil (110) nach Anspruch 10, **dadurch gekennzeichnet, dass** mindestens ein Rand der Lage aus metallischem Material (112) vorbestimmte Fixierungsbereiche (120) umfasst, die weder von der Lage aus Verbundmaterial (114) noch vom Polymermaterial (116) bedeckt sind, wobei die vorbestimmten Fixierungsbereiche (120) durch Bereiche (122) getrennt sind, die mit Polymermaterial bedeckt (116) sind.

12. Anordnung eines Hybridstrukturteils (110) nach Anspruch 11 und eines Strukturteils (124), **dadurch gekennzeichnet, dass** das Hybridstrukturteil (110) an das Strukturteil (124) durch die Fixierungsbereiche (120) fixiert ist.

13. Anordnung nach Anspruch 12, **dadurch gekennzeichnet, dass** das Strukturteil (124) mindestens einen Rand aufweist, auf den ein Rand (113a, 113b) der Lage aus metallischem Material (112) fixiert ist, und dadurch, dass der Rand des Strukturteils (124) Mulden (125) aufweist, wobei die Bereiche zwischen den Mulden in Kontakt mit den Fixierungsbereichen (120) der Lage aus metallischem Material sind, und wobei die Mulden (125) in Kontakt mit den Bereichen (122) der Lage aus metallischem Material sind, die mit Polymermaterial (116) bedeckt sind.

## Claims

1. A method for producing a hybrid-structure part (10, 110) of a motor vehicle, **characterized in that** it comprises the following steps:
(a) shaping of a sheet of metallic material (12, 112),
(b) provision of a sheet of composite material (14, 114) comprising at least one layer of fibers impregnated or embedded in a polymer matrix, said layer of fibers being selected from among a layer of unidirectional fibers and a layer of woven fibers,
(c) application of a layer of bonding material on one face of said sheet of metallic material, before or after shaping, or on one face of said sheet of composite material before or after shaping,
(d) formation of a hybrid element by shaping of said sheet of composite material to the shape of said sheet of metallic material and joining of the sheet of composite material to the sheet of metallic material by means of said layer of bonding material, so that the sheet of composite material partially covers a face of said sheet of metallic material,
(e) production of rigidification elements by overmolding of at least a part of the shaped hybrid element using a polymer material (16, 116) to form a hybrid-structure part, so that the polymer material covers, at least partially, the parts of the face of the sheet of metallic material not covered by said sheet of composite material.

2. The production method according to claim 1, wherein the shaping step (d) of a hybrid element is a hot stamping step of said sheet of composite material on said sheet of metallic material under efficient temperature and pressure conditions to shape said sheet of composite material, the layer of bonding material being positioned between the sheet of composite material and the sheet of metallic material, said bonding material being able to join the sheet of composite material to the sheet of metallic material in the hot stamping conditions.

3. The production method according to claim 2, wherein the steps (d) and (e) are performed in the same tooling.

4. The production method according to any one of claims 1 to 3, wherein the sheet of composite material provided in step (b) comprises at least one layer of unidirectional fibers and at least one layer of woven fibers.

5. The production method according to any one of claims 1 to 4, wherein the sheet of composite material provided in step (b) comprises one or more layers of identical or different fibers, said fibers being selected from among glass fibers, carbon fibers, basalt fibers, metal fibers or aramid fibers.

6. The production method according to any one of claims 1 to 5, wherein, during step (e), the shaped rigidification elements are stiffening ribs, optionally extending substantially perpendicularly to the sheet of composite material.

7. The production method according to any one of claims 1 to 6, wherein randomly arranged fibers are added to the polymer used in step (e).

8. The production method according to any one of claims 1 to 7, wherein the polymer material used in step (e) comprises:
- ground-up scraps derived from the sheet of composite material and from step (d) or step (b),
- optionally supplemented with a polymer, notably that present in the composite material of the sheet of composite material.

9. The production method according to any one of claims 1 to 8, wherein the polymers present in the sheet of composite material and the polymer used in step (e) are identical or different and selected from among: aliphatic polyamides (PA), polyphthalamides (PPA), polybutylene terephthalate (PBT), polyethylene terephthalate (PET), polycarbonates (PC), polypropylene, the mixtures of one or more of the previously mentioned polymers, the polyester resins, vinylester resins, epoxy resins, polyurethane resins, mixtures of one or more of these resins.

10. A hybrid-structure part (10, 110) of a motor vehicle that can be obtained by implementing the method according to any one of claims 1 to 9, comprising:
- a sheet of metallic material (12, 112),
- a sheet of composite material (14, 114), at least partly covering a face (12a, 112a) of said sheet of metallic material (12, 112), the sheet of composite material (14, 114) comprising at least one layer of fibers impregnated or embedded in a polymer matrix, said layer of fibers being selected from among a layer of unidirectional fibers and a layer of woven fibers,
- a polymer material (16, 116), notably molded, at least partially covering the face of said sheet of metallic material at least partially covered with the sheet of composite material, said polymer material optionally forming ribs (18, 118),
**characterized in that** the sheet of composite material (114) partially covers the face (112a) of said sheet of metallic material (112) and **in that** the polymer material (116) at least partially covers the uncovered parts of this face (112a).

11. A hybrid-structure part (110) according to claim 10, **characterized in that** at least one edge of the sheet of metallic material (112) comprises predetermined fastening areas (120) that are covered neither by the sheet of composite material (114) nor by the polymer material (116), said predetermined fastening areas (120) being separated by areas (122) covered with polymer material (116).

12. An assembly of a hybrid-structure part (110) according to claim 11 and a structural part (124), **characterized in that** the hybrid-structure part (110) is attached to the structural part (124) by the fastening areas (120).

13. The assembly according to claim 12, **characterized in that** said structural part (124) has at least one edge on which an edge (113a, 113b) of the sheet of metallic material (112) is fastened and **in that** said edge of the structural part (124) has depressions (125), the areas of the edge between the depressions being in contact with the fastening areas (120) of the sheet of metallic material and the depressions (125) being in contact with the areas (122) of the sheet of metallic material covered with polymer material (116).
